# DEMANDE DE BREVET EUROPEEN

(11) **EP 0 755 950 A1**
(43) Date de publication de la demande: **29.01.1997**
(21) Numéro de dépôt: 96401606.7
(22) Date de dépôt: 18.07.1996
(51) Int. Cl.: C08F 10/00, C08F 4/607

(54) **Procédé de polymérisation de l'éthylène en présence d'un composé phosphore**

(30) Priorité: 24.07.1995 FR 9508940
(71) Demandeur: ELF ATOCHEM S.A., 92800 Puteaux (FR)
(72) Inventeur: Grison, Claude, 54500 Vandoeuvre les Nancy (FR); Coutrot, Philippe, 54420 Saulyures les Nancy (FR); Barthel, Valérie, 68116 Guewenheim (FR); Brun, Claude, 64320 Idron (FR)

(57) **Abrégé**

L'invention concerne un procédé de préparation de polyéthylène ou d'un copolymère de l'éthylène et d'une oléfine comprenant de trois à vingt atomes de carbone, caractérisé en ce qu'il comprend une étape de polymérisation ou de copolymérisation de l'éthylène en présence d'un composé phosphoré comprenant un groupement phosphoryle. Le procédé selon l'invention mène à un polymère ou copolymère à l'indice de fusion relevé.

## Description

La présente invention concerne un procédé de préparation de polyéthylène ou d'un copolymère de l'éthylène et d'une oléfine comprenant de trois à vingt atomes de carbone, caractérisé en ce qu'il comprend une étape de polymérisation ou de copolymérisation de l'éthylène en présence d'un composé phosphoré comprenant un groupement phosphoryle. Le procédé selon l'invention mène à un polymère ou copolymère à l'indice de fusion relevé.

L'augmentation de l'indice de fusion d'un polymère est généralement réalisé par augmentation de la pression partielle d'hydrogène dans le réacteur de polymérisation. Le procédé selon l'invention présente donc l'avantage de permettre une réduction des quantités d'hydrogène nécessaires à l'obtention d'un polymère à indice de fusion donné. En particulier dans le cas des procédés de polymérisation en phase gazeuse, la réduction de la pression partielle d'hydrogène autorise une augmentation de la pression partielle de monomère et en conséquence une augmentation de la productivité. Par ailleurs, le procédé selon l'invention permet généralement un bon contrôle morphologique du polymère finalement synthétisé dans le cas des procédés en phase gaz et en suspension. Ceci signifie que pour ces procédés, le polymère obtenu est une meilleure réplique morphologique de la composante catalytique solide utilisée.

Le brevet US 4,444,967 décrit l'utilisation de dérivés phosphorés en tant qu'agents d'aggrégation dans le cadre de la préparation d'une composante catalytique solide. La demande de brevet EP 376 559 enseigne que la présence d'une phosphine dans le milieu de polymérisation d'une oléfine est susceptible de réduire la formation de fines particules de polymère.

Dans le cadre de la présente invention, le composé phosphoré comprenant un groupement phosphoryle peut être représenté par la formule 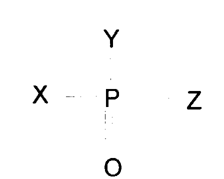 dans laquelle X, Y et Z représentent des radicaux comprenant chacun au moins un atome d'hydrogène et/ou d'oxygène et/ou de carbone. De préférence, l'atome de phophore du groupement phosphoryle est lié, en plus de l'atome d'oxygène du groupement phophoryle, à au moins un autre atome d'oxygène. De préférence, la somme de la masse molaire des atomes en alpha de l'atome de phosphore du groupement phosphoryle, ce qui inclut l'atome d'oxygène du groupement phophoryle, est au moins égale à 49. Les radicaux X, Y et Z peuvent par exemple être choisis parmi l'hydrogène, les radicaux alkoxy, alkyle, hydroxyle. Cette définition inclut les familles de dérivés phosphorés suivantes :
- les phosphonates représentés par la formule 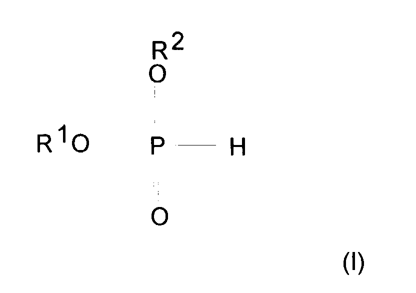
- les alkylphosphonates représentés par la formule 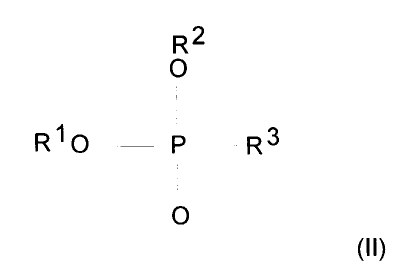
- les α-cétophosphonates représentés par la formule 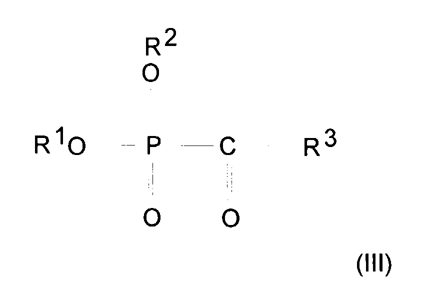
- les β-cétophosphonates représentés par la formule 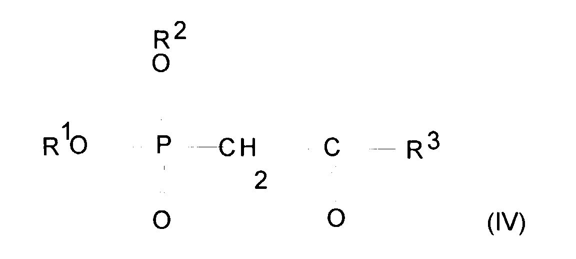
- les acides phosphiniques représentés par la formule 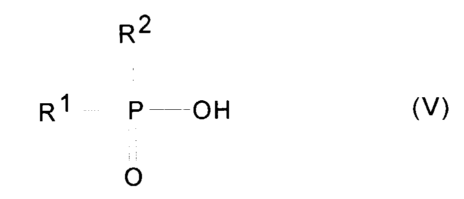
- les monoacides phosphoniques représentés par la formule 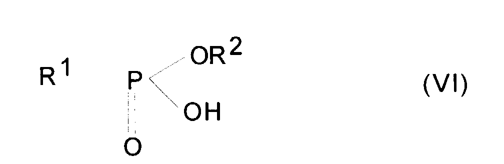
- les diacides phosphoniques représentés par la formule 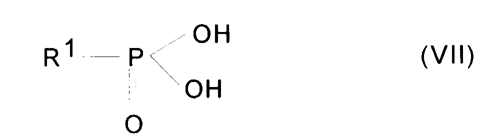
- les hydrogénophosphates représentés par la formule 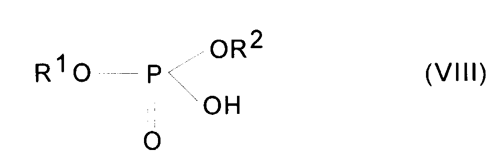
- les dihydrogénophosphates représentés par la formule

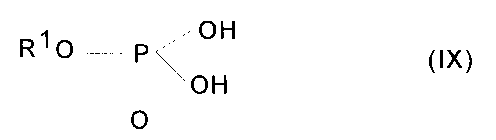

Dans les formules ci-dessus, les radicaux R¹, R² et R³ peuvent représenter des groupements hydrocarbonés saturés ou insaturés, linéaires ou ramifiés et pouvant comprendre au moins un cycle, tel que le radical benzyle ou phényle.

A titre d'exemple, R¹, R² et R³ peuvent être choisis parmi les radicaux alkyles comprenant de un à dix atomes de carbone, tels que les radicaux méthyle, éthyle, propyle, butyle, hexyle.

Le procédé selon l'invention est particulièrement efficace lorsque la polymérisation ou copolymérisation est menée en phase gazeuse. Dans ce cas, le composé comprenant un groupement phosphoryle présente de préférence la structure 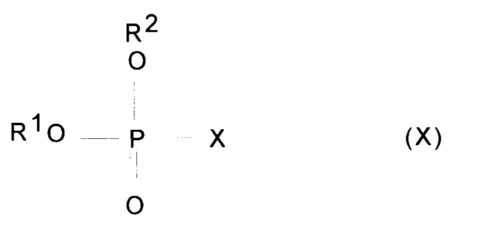 dans laquelle R¹, R² et X pouvant être identiques ou différents représentent un radical hydrocarboné saturé ou insaturé, linéaire ou ramifié et pouvant comprendre au moins un cycle, le radical X pouvant en outre représenter un atome d'hydrogène, un radical 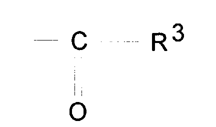 ,le radical R³ pouvant être choisi dans la liste des mêmes radicaux que pour le choix de R¹ et R². Cette dernière définition exclut la famille des p-cétophosphonates. A titre d'exemple, R¹, R², X et R³ peuvent être choisis parmi les radicaux phényle ou benzyle ou les radicaux alkyles comprenant de un à dix atomes de carbone, tels que les radicaux méthyle, éthyle, propyle, butyle, hexyle.

Lorsque la polymérisation ou copolymérisation est menée en suspension, le composé comprenant un groupement phosphoryle est de préférence tel que chacune des trois valences de l'atome de phosphore non impliquée dans le groupement phosphoryle est liée à des atomes choisis parmi l'oxygène et le carbone, l'une au moins de ces valences étant liée à un atome d'oxygène et l'une au moins de ces valences étant liée à un atome de carbone. Dans ce cas, les acides phosphiniques de formule (V) sont une famille de composés préférés. Pour ces derniers composés, les groupements R¹ et R² représentent de manière encore préférée des radicaux alkyles comprenant de un à quatre atomes de carbone.

Le procédé selon l'invention concerne plus particulièrement les procédés de polymérisation faisant intervenir une composante catalytique solide comprenant un métal de transition.

Le métal de transition peut être choisi parmi les éléments des groupes 3b, 4b, 5b, 6b, 7b, 8, les lanthanides, les actinides, de la classification périodique des éléments, tels que définis dans le Handbook of Chemistry and Physics, soixante et unième édition, 1980-1981. Ces métaux de transition sont de préférence choisis parmi le titane, le vanadium, le hafnium, le zirconium ou le chrome.

La composante catalytique solide peut être de type Ziegler-Natta et par exemple se présenter sous la forme d'un complexe comprenant au moins les éléments Mg, Ti et Cl, le titane se trouvant sous forme chloré de Ti^{IV} et/ou de Ti^{III}. La composante solide peut comprendre un donneur ou accepteur d'électron.

Une composante catalytique de type Ziegler-Natta est habituellement le résultat de la combinaison d'au moins un composé du titane, un composé du magnésium, de chlore et éventuellement un composé d'aluminium et/ou un donneur ou accepteur d'électrons ainsi que de tout autre composé utilisable dans ce type de composante.

Le composé du titane est choisi habituellement parmi les composés chlorés du titane de formule Ti-(OR)ₓCl₄₋ₓ dans laquelle R représente un radical hydrocarboné aliphatique ou aromatique contenant de un à quatorze atomes de carbone, ou représente COR¹ avec R¹ représentant un radical hydrocarboné aliphatique ou aromatique contenant de un à quatorze atomes de carbone, et x représente un nombre entier allant de 0 à 3.

Le composé du magnésium est habituellement choisi parmi les composés de formule Mg(OR²)ₙCl₂₋ₙ, dans laquelle R² représente l'hydrogène ou un radical hydrocarboné linéaire ou cyclique et n représente un nombre entier allant de 0 à 2.

Le chlore présent dans la composante de type Ziegler-Natta peut provenir directement de l'halogénure de titane et/ou de l'halogénure de magnésium. Il peut également provenir d'un agent chlorant indépendant tel que l'acide chlorhydrique ou un halogénure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionnel avantageusement choisi parmi les acides carboxyliques aliphatiques ou aromatiques et leurs esters alkyliques, les éthers aliphatiques ou cycliques, les cétones, les esters vinyliques, les dérivés acryliques, en particulier acrylates d'alkyle ou méthacrylates d'alkyle et les silanes tels que les alcoxysilanes aromatiques, alicycliques ou aliphatiques. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, le phényltriéthoxysilane, le cyclohexylméthyidiméthoxysilane et le dicydopentyldiméthoxysilane. Le donneur d'électron peut également être l'un de ceux cités dans la demande de brevet EP 0361493. L'accepteur d'électrons est un acide de Lewis, choisi de préférence parmi le chlorure d'aluminium, le trifluorure de bore, le chloranile ou encore les alkylaluminiums, les halogénoalkylaluminiums et alkylmagnésiums.

De préférence, le composé phosphoré n'est pas inclus dans la composante catalytique solide avant toute étape de polymérisation ou copolymérisation, mais est ajouté dans le réacteur de polymérisation ou copolymérisation de façon indépendante de la composante solide. Le composé phosphoré n'est donc pas introduit dans le milieu de polymérisation ou copolymérisation sous la forme d'une composante catalytique solide obtenue par broyage ou traitement d'un mélange comprenant un dérivé du titane et le composé phosphoré. Ceci n'exclut pas que le composé phosphoré soit inclus dans le milieu de polymérisation ou copolymérisation sous la forme d'un prépolymère. Il n'est pas non plus exclu que le composé phosphoré soit introduit dans le milieu de polymérisation ou copolymérisation sous la forme d'un complexe avec, par exemple, un dérivé organique de l'aluminium.

Il ne s'agit donc pas de traiter la composante catalytique solide par le composé phosphoré préalablement à la polymérisation ou copolymérisation. Le composé phosphoré peut être introduit directement dans le réacteur de polymérisation ou copolymérisation, par exemple individuellement, en présence de monomère et/ou de polymère ou copolymère, le cas échéant après le début de la polymérisation ou copolymérisation.

De préférence, le composé phosphoré est introduit dans le milieu de polymérisation ou copolymérisation de façon à ce que le rapport molaire du phosphore sur le métal de transition soit compris entre 1.10⁻⁴ et 5.

Le composé phosphoré peut être introduit dans le milieu de polymérisation ou copolymérisation sous la forme de solution dans un solvant inerte. Généralement, on peut utiliser comme solvant les hydrocarbures aliphatiques, alicycliques ou aromatiques, tels que l'heptane, l'hexane, l'isobutane, le cyclohexane, le toluène, le xylène.

Suivant la nature du métal de transition inclus dans la composante catalytique solide, il peut être nécessaire d'ajouter au milieu de polymérisation un cocatalyseur capable d'activer le métal de transition de la composante solide. Si le métal de transition est le titane, le cocatalyseur peut être choisi parmi les dérivés organiques de l'aluminium.

Ce dérivé organique de l'aluminium peut être un dérivé de formule R¹R²R³Al dans laquelle R¹, R² et R³ pouvant être identiques ou différents, représentent chacun, soit un atome d'hydrogène, soit un atome d'halogène, soit un groupe alkyle contenant de 1 à 20 atomes de carbone, l'un au moins de R¹, R² ou R³ représentant un groupe alkyle. A titre d'exemple de composé adapté, on peut citer le dichlorure ou dibromure ou dihydrure d'éthylaluminium, le dichlorure ou dibromure ou dihydrure d'isobutylaluminium, le chlorure ou bromure ou hydrure de diéthylaluminium, le chlorure ou bromure ou hydrure de di-n propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule 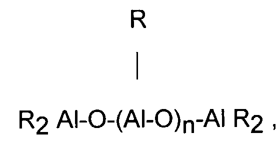 ou cyclique de formule 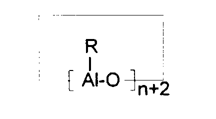 R représentant un radical alkyle comprenant de un à six atomes de carbone, et n étant un nombre entier allant de 2 à 40, de préférence de 10 à 20. L'aluminoxane peut comporter des groupements R de nature différente. De préférence, les groupements R représentent tous des groupements méthyle. Par ailleurs, par cocatalyseur, on entend également les mélanges des composés précités.

Les quantités de cocatalyseur utilisées doivent être suffisantes pour activer le métal de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 1000.

Le procédé selon l'invention peut être mené en suspension ou en phase gazeuse.

Le procédé de polymérisation en suspension consiste à réaliser une polymérisation en suspension dans un milieu inerte et notamment dans un hydrocarbure aliphatique, comme par exemple le n-heptane, le n-hexane, l'isohexane, l'isopentane ou l'isobutane.

Les conditions opératoires pour ces procédés de polymérisation, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension, on peut opérer à des températures inférieures à 110°C et sous des pressions allant de la pression atmosphérique à 70 bars.

Un procédé de polymérisation en phase gazeuse peut être mis en oeuvre à l'aide de tout réacteur permettant une polymérisation en phase gazeuse de l'éthylène et en particulier dans un réacteur à lit agité et/ou à lit fluidisé.

Les conditions de mise en oeuvre de la polymérisation en phase gazeuse, notamment température, pression, injection de l'éthylène et de son éventuel comonomère dans le réacteur à lit agité et/ou à lit fluidisé, contrôle de la température et de la pression de polymérisation, sont analogues à celles proposées dans l'art antérieur pour la polymérisation en phase gazeuse de l'éthylène. On opère généralement à une température inférieure à 110°C et sous une pression allant de la pression atmosphérique à 70 bars.

Dans le cadre de la présente invention, le terme polymérisation englobe les termes prépolymérisation et copolymérisation.

Une prépolymérisation est une polymérisation ou copolymérisation dont le degré d'avancement est inférieur à 10 % en poids du polymère ou copolymère que l'on souhaite finalement préparer. Généralement, une prépolymérisation est réalisée à débit contrôlé de monomère.

Le procédé selon l'invention peut être une prépolymérisation menant à un prépolymère. Le prépolymère ainsi obtenu contient du phosphore et est également un objet de la présente invention. Généralement, la prépolymérisation est menée jusqu'à l'obtention d'un prépolymère dont le diamètre moyen des particules (diamètre en dessous duquel se trouve la moitié de la masse des particules) est compris entre 30 et 250 µm.

Généralement, le prépolymère selon l'invention contient de 1 à 100 000 ppm en poids de phosphore. Lorsque la prépolymérisation est menée en suspension, il est préférable, pour séparer le prépolymère obtenu du solvant, d'évaporer le solvant sans procéder à une filtration, de façon à ce que les éventuelles espèces phosphorées subsistant en solution se déposent sur le prépolymère. Le prépolymère est un solide sous forme de poudre.

Le prépolymère selon l'invention peut être engagé en polymérisation de l'éthylène ou copolymérisation de l'éthylène avec une oléfine comprenant de trois à vingt atomes de carbone dans les conditions identiques aux polymérisations ou copolymérisations faisant intervenir un prépolymère sans phosphore. L'influence du composé phosphoré contenu dans le prépolymère sur l'indice de fusion se retrouve également au niveau de polymère ou copolymère préparé à partir du prépolymère selon l'invention. Le prépolymère peut contenir suffisamment de phophore pour qu'il produise sont effet sur l'indice du fusion lors de la polymérisation ou copolymérisation sans qu'il ne soit nécessaire de rajouter du composé phosphoré lors de ladite polymérisation ou copolymérisation.

Dans le cadre de la présente invention, l'éthylène peut être polymérisée seule ou copolymérisé avec une oléfine comprenant de trois à vingt atomes de carbone. Comme oléfine, on peut citer le propylène, le but-1-ène, le 4-méthyl-pent-1-ène, le oct-1-ène, le hex-1-ène, le 3-méthylpent-1-ène, le 3-méthylbut-1-ène, le déc-1-ène, le tétradéc-1-ène. Lorsque l'éthylène est copolymérisé avec une oléfine, le rapport molaire oléfine/éthylène dans le milieu de polymérisation est en général inférieur à 0,5.

Dans les exemples qui suivent, l'indice de fusion (représenté par Ml₂) des polymères obtenus a été mesuré à 190°C sous une charge de 2,16 kg et est exprimé en gramme de polymère écoulé par dix minutes. Cet indice a été déterminé conformément à la norme ASTM D-1238-E.

On donne ci-après la signification des quelques abréviations utilisées dans les exemples :
- Me :: radical méthyle
- Et :: radical éthyle
- Bu :: radical n-butyle
- Hex :: radical n-hexyle
- Ph :: radical phényle
- Bn :: radical benzyle

Dans les exemples qui suivent, on a utilisé comme composante catalytique solide des composantes sur support de chlorure de magnésium comprenant du titane comme métal de transition. La composante catalytique A est réalisée comme dans l'exemple 9 de la demande de brevet français n° 9507397, sauf que l'on remplace le support par celui préparé dans l'exemple 4 de la même demande.

On donne ci-après les teneurs en titane, magnésium et chlore des composantes catalytiques solides utilisées dans les exemples :

| | Ti | Mg | Cl |
|---|---|---|---|
| A | 3,4 | 13,8 | 60,5 |
| B | 14,2 | 4,9 | 35 |
| C | 17,2 | 4,7 | 31,9 |

### Exemples 1 à 10 (polymérisations en suspension)

Dans un réacteur de 1,5 litres, muni d'un système d'agitation et d'une régulation de température, on introduit sous azote à 45°C et sous lente agitation, après purge par des cycles vide/azote, un litre d'hexane, six millimoles de triisobutylaluminium, 0,3 millimoles de composé phosphoré sous la forme d'une solution à x millimoles par litre dans un solvant. On porte l'agitation à 400 révolutions par minute, puis la température est portée à 85°C. On introduit ensuite 4 bars de pression partielle d'hydrogène, puis on introduit de l'éthylène jusqu'à ce que la pression totale atteigne 10 bars. Par poussée à l'azote, on injecte 20 mg de composante catalytique solide, pour atteindre une pression totale de 12 bars. On maintient cette pression pendant deux heures par apport d'éthylène. On arrête alors le débit d'éthylène, et l'on refroidit le réacteur. Le polymère est séparé du milieu par filtration et séché en étuve à 70°C à la pression atmosphérique pendant 4 heures.

Le tableau 1 rassemble les résultats. Pour chaque exemple, ce tableau indique la nature du composé phosphoré, les groupements R', R² et R³ étant ceux des formules (I) à (X) précédemment listées, la valeur de x et celle du solvant utilisé pour son introduction, ainsi que la nature de la composante catalytique solide. Les résultats dans la colonne "variation MI₂" sont exprimés en différence de MI₂ par rapport au même essai sans composé phosphoré. En l'absence de composé phosphoré, la composante A mène à un MI₂ de 1,3 g/10 min, la composante B mène à un MI₂ de 2,3 g/10 min, et la composante C mène à un MI₂ de 1,2 g/10 min. L'exemple 10 est comparatif car le composé phosphoré ne comprend pas de groupement phosphoryle. Dans ce cas, la désactivation du système catalytique a été telle qu'aucune mesure d'indice de fusion n'a été possible.

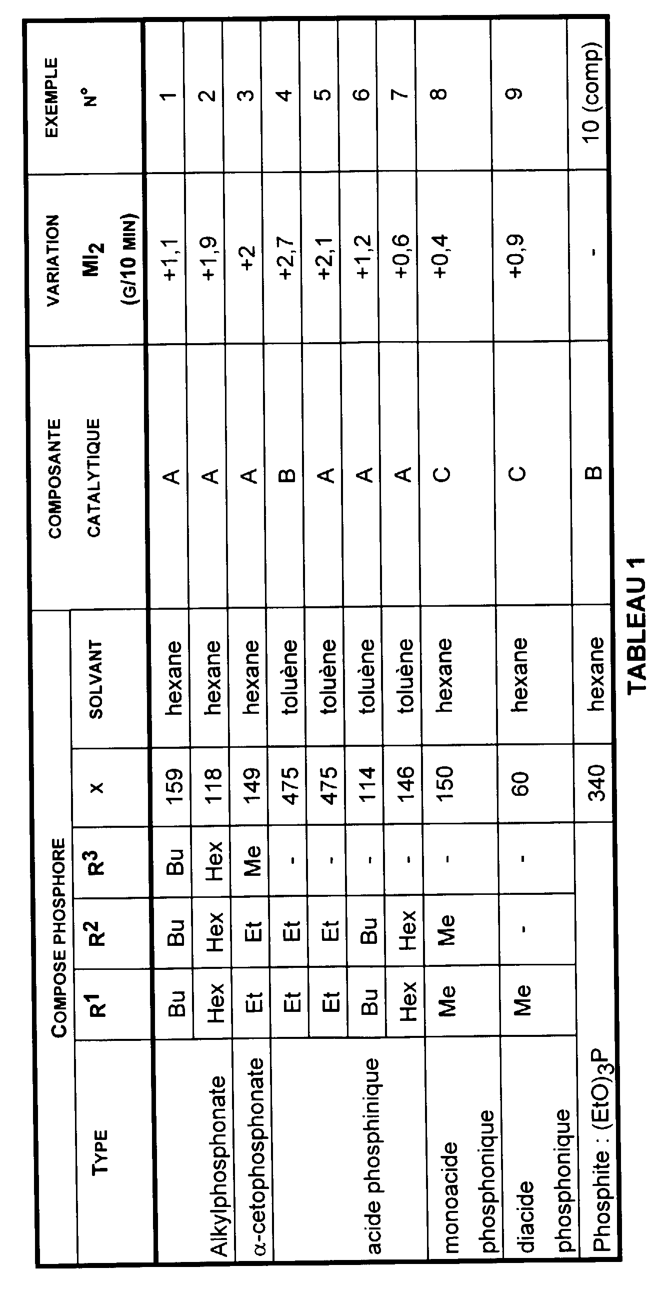

### Exemples 11 à 18 (prépolymérisation en suspension puis polymérisation en phase gazeuse)

Dans un réacteur sec de 1 litre, on introduit sous azote et sous une agitation de 250 révolutions par minute à 40 °C :
- 0,5 litre d'hexane, d'hexane,
- 7,5 millimoles de trihexylaluminium,
- 0,25 millimole de composé phosphoré,
- 0,5 g de composante catalytique solide comprenant 14,5 % en poids de titane, 5,1 % en poids de magnésium et 60 % en poids de chlore,
- 0,5 bar d'hydrogène.

Après 5 minutes d'homogénéisation, on introduit 80 NI d'éthylène en trois heures. On stoppe alors l'injection d'éthylène, on décomprime le réacteur jusqu'à la pression atmosphérique et l'on purge ce dernier à l'azote. On porte alors la température à 60°C et l'on élimine l'hexane par entraînement sous balayage d'azote. Après retour à la température ambiante, on recueille un prépolymère contenant y ppm en poids de phosphore.

Dans un réacteur sphérique de 8,2 litres équipé d'un système de régulation thermique par double enveloppe et d'un système d'agitation, on introduit à 90°C et sous une agitation de 400 révolutions par minute, après purge à l'azote :
- 100 g de polythylène provenant d'un essai identique,
- 6 bars d'hydrogène,
- 8 bars d'éthylène,
- 6 g du prépolymère par poussée à l'azote,
l'azote étant introduit jusqu'à l'obtention d'une pression absolue totale de 21 bars. Cette valeur de pression est maintenue constante par addition d'éthylène pendant deux heures, puis l'on décomprime et refroidit le réacteur. Le tableau 2 rassemble les résultats. Pour chaque exemple, ce o tableau indique la nature du composé phosphoré, les groupement R¹, R² et R³ étant ceux des formules (I) à (X) précédemment listées et la valeur de y (concentration en phosphore dans le prépolymère). Les résultats dans la colonne "variation MI₂" sont exprimés en différence de MI₂ par rapport au même essai sans composé phosphoré. En l'absence de composé phosphoré, le polymère présente un MI₂ de 4,7 g/10 minutes.

**TABLEAU 2**

| Composé phosphoré | | | | y | Variation MI2 (g/10 min) | Ex. n° |
|---|---|---|---|---|---|---|
| Type | R¹ | R² | R³ | | | |
| Alkylphosphonate | Me | Me | Me | 78 | + 2,3 | 11 |
| | Et | Et | Et | 80 | + 3,6 | 12 |
| | Et | Et | Me | 75 | +3,2 | 13 |
| | Et | Et | Bn | 80 | + 1,2 | 14 |
| | Bu | Bu | Bu | 80 | + 4,7 | 15 |
| α-cétophosphonate | Et | Et | Me | 81 | + 3,1 | 16 |
| Phosphonate | Ph | Ph | - | 80 | + 3,4 | 17 |
| diacide phosphonique | Me | - | - | 75 | + 0,6 | 18 |

### Exemple 19 (prépolymérisation en phase gazeuse puis polymérisation en phase gazeuse)

Dans un réacteur sphérique de 8,2 litres équipé d'un système d'agitation et d'une régulation thermique par double enveloppe, on introduit successivement, après purge du réacteur à l'azote, à 60°C et sous une agitation de 150 révolutions par minute :
- 0,5 litre d'hexane,
- 4,5 millimoles de trihexylaluminium,
- 0,15 millimole de diméthylphosphonate de méthyle,
- 10 g de composante catalytique solide comprenant 14,5 % en poids de titane, 5,1 % en poids de magnésium et 60 % en poids de chlore,
- 0,5 bar d'azote,
- 0,5 bar d'hydrogène,
- 85 NI d'éthylène en 3h30min. à l'aide d'un dispositif de contrôle de débit.

On décomprime alors le réacteur et l'on introduit sous atmosphère d'azote 100 g de polyéthylène haute densité de MI₂=7 g/10 min et de diamètre moyen de particule de 400 µm. On évapore à 70°C sous agitation par entraînement à l'azote, l'hexane pour obtenir une poudre sèche. Toujours sous agitation à 60°C, on ajoute successivement :
- 2 bars d'azote,
- 1 bar d'hydrogène,
puis en 4h30min à l'aide d'un dispositif de contrôle de débit :
- 168 millimoles de trihexylaluminium,
- 5,6 millimoles de diméthylphosphonate de méthyle,
- 808 NI d'éthylène.

Après décompression et purge du réacteur, on récupère un prépolymère contenant 140 ppm en poids de phosphore.

On procède ensuite à une polymérisation en phase gazeuse de la même façon que pour les exemples 11 à 18. On récupère ainsi un polymère présentant un MI₂ de 9,5 g/10 minutes.

### Exemple 20

On procède comme pour l'exemple 19 sauf que l'on n'introduit jamais de composé phosphoré. On obtient ainsi un polymère présentant un MI₂ de 5,3 g/10 minutes.

### Exemple 21

On effectue une prépolymérisation comme pour les exemples 11 à 18, sauf que l'on utilise 4 millimoles de trihexylaluminium (THA) à la place de 7,5 millimoles et sauf qu'aucun composé phophoré n'est ajouté. On obtient ainsi un prépolymère.

On procède ensuite à une polymérisation en présence du prépolymèreet dans les conditions des exemples 11 à 18, sauf qu'après introduction dudit prépolymère, on injecte par poussée à l'azote une solution d'hexane à 50 % en volume comprenant 4 millimoles de THA et 0,25 millimoles de diméthylphosphonate de méthyle, l'azote étant introduit jusqu'à l'obtention d'une pression absolue totale de 21 bars. Le polymère obtenu présente un MI₂ de 6,7g/10minutes.

### Exemple 22 (comparatif)

On procède comme pour l'exemple 21 sauf qu'aucun composé phophoré n'est utilisé. Le polymère présente un MI₂ de 4,5 g/10 minutes.

## Revendications

1. Procédé de préparation en phase gaz ou en suspension de polyéthylène ou d'un copolymère de l'éthylène et d'une oléfine comprenant de trois à vingt atomes de carbone, faisant intervenir une composante catalytique solide et un composé phophoré comprenant un groupement phosphoryle, ledit composé phosphoré étant introduit dans le réacteur de polymérisation ou copolymérisation de façon indépendante de la composante catalytique solide, caractérisé en ce que le composé phosphoré peut être représenté par la formule 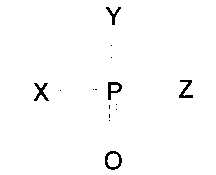 dans laquelle X,Y ou Z représentent des radicaux comprenant chacun au moins un atome d'hydrogène et/ou d'oxygène et/ou de carbone, l'atome de phophore du groupement phosphoryle étant lié, en plus de l'atome d'oxygène du groupement phosphoryle, à au moins un autre atome d'oxygène, la somme de la masse molaire des atomes en alpha de l'atome de phophore du groupement phosphoryle étant au moins égale à 49.

2. Procédé selon la revendication 1 caractérisé en ce que le composé phosphoré est choisi parmi les hydrophosphonates, les α-cétophosphonates, les phosphonates, les β-cétophosphonates, les acides phosphiniques, les monoacides phosphoniques, les diacides phosphoniques, les hydrogénophosphates, les dihydrogénophosphates.

3. Procédé selon la revendication 1 ou 2 caractérisé en ce que l'étape de polymérisation ou copolymérisation est menée en suspension.

4. Procédé selon la revendication 3 caractérisé en ce que chacune des trois valences de l'atome de phosphore non impliquée dans le groupement phosphoryle est liée à des atomes choisis parmi l'oxygène et le carbone, l'une au moins des ces valences étant liée à un atome de carbone.

5. Procédé selon la revendication 6 caractérisé en ce que le composé phosphoré est un acide phosphinique.

6. Procédé selon la revendication 7 caractérisé en ce que l'acide phosphinique comprend deux radicaux alkyles comprenant de un à quatre atomes de carbone.

7. Procédé selon la revendication 1 ou 2 caractérisé en ce que l'étape de polymérisation ou copolymérisation est menée en phase gazeuse.

8. Procédé selon la revendication 7 caractérisé en ce que le composé phosphoré présente la structure 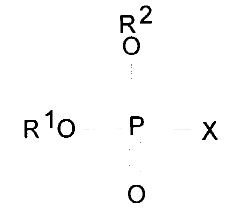 dans laquelle R¹, R² et X représentent un radical hydrocarboné saturé ou insaturé, linéaire ou ramifié et pouvant comprendre au moins un cycle, le radical X pouvant en outre représenter un atome d'hydrogène, un radical 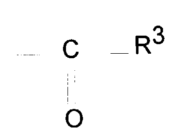 le radical R³ pouvant être choisi dans la liste des mêmes radicaux pour le choix de R1 et R2

9. Procédé selon la revendication 8 caractérisé en ce que les radicaux R¹, R², X et R³ sont choisis parmi les radicaux phényle, benzyle ou alkyle comprenant de un à 10 atomes de carbone.

10. Procédé selon la revendication 9 caractérisé en ce que le composé phosphoré appartient à la famille des alkylphosphonates, α-cétophosphonates ou phosphonates.

11. Procédé selon l'une des revendications 1 à 10 caractérisé en ce que la composante catalytique solide comprend un métal de transition.

12. Procédé selon la revendication 11 caractérisé en ce que le métal de transition est le titane et en ce que le milieu de polymérisation ou copolymérisation comprend un dérivé organique de l'aluminium.

13. Procédé selon la revendication 12 caractérisé en ce que la composante catalytique solide se présente sous la forme d'un complexe comprenant les éléments Mg, Ti, et Cl.

14. Procédé selon l'une des revendications 1 à 13 caractérisé en ce que la polymérisation ou copolymérisation est menée à une température inférieure à 110°C et à une pression allant de la pression atmosphérique à 70 bars.

15. Procédé selon l'une des revendications 1 à 16 caractérisé en ce que le rapport molaire oléfine/éthylène est inférieur à 0,5.

16. Procédé selon l'une des revendications 1 à 15 caractérisé en ce que la polymérisation ou copolymérisation est une prépolymérisation menant à un prépolymère solide sous forme de poudre.

17. Procédé selon la revendication 16 carctérisé en ce que la prépolymérisation est menée à débit contrôlé de monomère.

18. Prépolymère susceptible d'être obtenu par le procédé de la revendication 16 ou 17.

19. Prépolymère solide sous forme de poudre comprenant de 1 à 100 000 ppm en poids de phosphore.

20. Prépolymère selon la revendication 18 ou 19 présentant un diamètre moyen de particule allant de 30 à 250 µm.

21. Procédé de polymérisation de l'éthylène ou de copolymérisation de l'éthylène avec une oléfine comprenant de trois à vingt atomes de carbone en présence d'un prépolymère de l'une des revendications 18 à 20.

22. Procédé selon la revendication 21 caractérisé en ce qu'aucun composé phosphoré n'est ajouté en plus de celui contenu dans le prépolymère.
